# EUROPEAN PATENT SPECIFICATION

(11) **EP 1 203 952 B1**
(45) Date of publication and mention of the grant of the patent: **08.02.2012**
(21) Application number: 01125064.4
(22) Date of filing: 22.10.2001
(51) Int. Cl.: G01N 29/04

(54) **Ultrasonic device for inspecting ophthalmic lenses**
Ultraschallvorrichtung zur Inspektion von ophthalmischen Linsen
Dispositif ultrasonore destiné à l'inspection de lentilles ophtalmiques

(30) Priority: 23.10.2000 EP 00122985
(43) Date of publication of application: 08.05.2002
(73) Proprietor: Novartis AG, 4056 Basel (CH)
(72) Inventor: Biel, Roger, 65936 Frankfurt am Main (DE); Schubert, Martin, 04275 Leipzig (DE); Grill, Wolfgang, 61462 Königstein i.Ts. (DE)
(74) Representative: Bohest AG

(56) References cited:
- EP-A- 0 357 905
- EP-A- 0 491 663
- US-A- 4 035 082
- DR. HIELSCHER GMBH: "UIP 250 Industrial Ultrasonic Processor 250W" DATA SHEET, [Online] 12 November 2000 (2000-11-12), XP002162188 Retrieved from the Internet: <URL:http://www.hielscher.com/ultrasonics/ uip250.htm> [retrieved on 2001-03-06]

## Description

The invention relates to a device and a method for the automatic inspection of ophthalmic lenses, especially contact lenses, in an automatic lens manufacturing process.

The production of contact lenses using conventional methods, such as rotary processes for hard contact lenses and pouring processes for soft contact lenses in disposable plastic moulds is relatively expensive. As a rule, these contact lenses are used for a period of one year to one month. However, technical advancement in recent years has enabled contact lenses to be produced, which are worn only on one day and are replaced afterwards by new contact lenses. However, this has been made possible only through a high degree of automation of the production plants. Production of these contact lenses advantageously takes place using reusable mould halves, the matrix and the patrix, which normally consist of glass or quartz. Between these mould halves is a hollow cavity, which corresponds to the subsequent contact lens shape. Before closing the mould halves, a polymer solution is measured into the matrix. The upper mould half is exposed to UV light, which leads to crosslinking of the lens material. Subsequently, the lens is removed from the mould half with suction grips and is placed in the pack.

In order to assure constant quality of the contact lenses, provisions are in place for automatic inspection of the contact lenses using industrial image-processing methods. In image-processing, the lenses are tested both in the mould halves and at the vacuum grips. An image processing method of this kind is described for example in EP patent 491 663. Moreover, using optical methods, not all defects of contact lenses can be detected without problems, so that defective contact lenses pass the quality control as defect-free and it is only the customer who establishes the defects when he removes the lens from the pack or even when he first wears the contact lens.

A non-destructive method and device for inspecting an ophthalmic lens made of glass is known from US-A-4,035,082. The lens to be inspected is immersed in a liquid contained in a container and is impinged upon by an illumination beam to determine whether the lens is chemically treated or hardened.

A non-destructive method and device for measuring the profile of an object such as a lens is disclosed in EP-A-0 357 905. The lens may be immersed in a liquid, e.g. water, contained in a tank, and its profile is measured with the aid of ultrasonic waves emitted by an ultrasonic transducer extending into the liquid contained in the tank.

The invention is based on the problem of providing an inspection device and an inspection method, which recognise the defective lenses, which are difficult to detect with conventional optical methods, with a high degree of reliability.

The invention solves this problem with a device comprising the features of claim 1 and with a method comprising the features of claim 9. As far as further embodiments of the device and method according to the invention are concerned, reference is made to the dependent claims.

According to the invention, the contact lenses are exposed to an ultrasonic field, which leads to destruction of defective lenses, while perfect lenses are as a rule not destroyed. In particular, the method is capable of detecting cracks in contact lenses which are often overlooked by optical methods, since this type of defect reacts especially sensitively to the soundwaves being received.

Further details and advantages of the invention may be seen from the description that follows and the drawing. In the drawing,

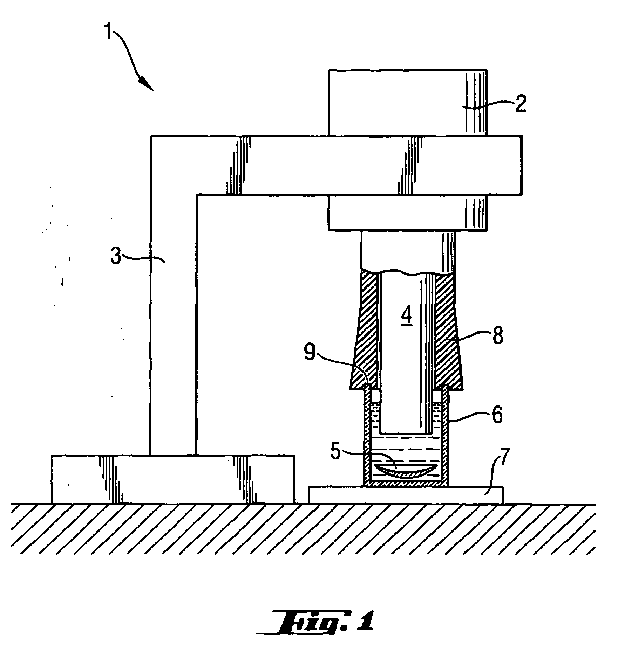

- Fig. 1: shows a schematic illustration of an inspection device according to the invention.

The inspection device 1 illustrated schematically in fig. 1 consists of an ultrasonic processor 2, which is preferably fixed by a holder 3. The ultrasonic processor 2 has a rod-shaped sonotrode 4, which emits the ultrasonic waves. The ultrasonic processor 2 is preferably a UIP 250 appliance from Hielscher. The operating frequency of this device is 24 kHz ± 1 kHz. It is, however, also conceivable to use other frequency ranges. The maximum ultrasonic intensity is 138 W/cm² and the maximum amplitude is in the region of ca. 250 µm. The butt end of the sonotrode 4 has a diameter of 14 mm. However, it is within the scope of the invention to use other devices with other parameters.

To examine a contact lens 5 with the ultrasonic processor 2, the contact lens 5 is inserted into a holding container. This container is preferably a glass cuvette 6 of a basic cylindrical shape. The cuvette 6 is preferably filled with water or a comparable test liquid. The cuvette 6 is advantageously located on a spring-loaded holding plate 7. The positioning of the contact lens 5 in the cuvette 6 is of no importance to the examination process. After inserting the contact lens in the cuvette 6, the sonotrode 4 is plunged into the container 6, whereby the sonotrode 4 is immersed so deeply that the bottom is surrounded by water and thus the oscillations emanating from the sonotrode 4 are transferred to the water. The sonotrode 4 is suitably surrounded by a sealing sleeve 8, which is advantageously tuned to the vibration behaviour of the sonotrode 4. The sealing sleeve 8 is preferably made of Teflon and is pushed over the sonotrode 4 and held by a sealing ring at the oscillation node of the sonotrode 4. At the end facing the cuvette 6, the sealing sleeve 8 preferably has a groove or recess 9 to cover the edge of the glass cuvette 6, so that no liquid can escape from the container 6. The sonotrode 4 is immersed into the container 6 to such an extent that the sealing sleeve 8 rests on the edge of the glass cuvette. In this way, a defined depth is given. By expelling the water, it can be ensured that no air remains in the container 6 and the ultrasound is ideally coupled in. The distance from the sonotrode 4 to the glass bottom of the cuvette 6, which is provided for the contact lens, is advantageously about 9 mm. After immersing the sonotrode 4 into the cuvette 6, the ultrasonic processor 2 is switched on and the contact lens 5 in the cuvette 6 is sonicated.

Using the device according to the invention, examinations were made of perfect and defective lenses, the quality of the lenses having already been examined using a shadowgraph.

The power and duration parameters of sonication are of crucial importance to the results of the examination. If too high power is applied, almost all the originally perfect lenses are destroyed by the ultrasonic treatment, and if the power is too low, defective lenses are also not destroyed. The same applies to the time during which the lens is exposed to sonication. By varying the time or the power, the energy applied overall is modified. The range regarded as acceptable for the examinations is 5 - 15% destruction of all lenses rated to be perfect. Since the lenses have been graded as perfect using an optical examination method, it is quite possible that the lenses have defects which can only be detected mechanically. For the ultrasonic processor used, a duration of 6 seconds and 70% of the maximum power of the device proved to be the optimum values. However, within the context of the invention, other settings for the duration and intensity of sonication may also be chosen. In particular, when choosing another ultrasonic processor, it may be expedient to modify the parameters.

The examinations for defective lenses are suitably carried out using the above-mentioned setting. The examination results show that lenses especially with cracks were destroyed by almost 100%. For other types of defect, the destruction rate was not so high. The examination method is thus particularly suitable for detecting defective lenses with cracks.

## Claims

1. Device for examining an ophthalmic lens, especially a contact lens, comprising an ultrasonic processor (2) with a sonotrode (4) and a holding container (6) open at the top, the holding container (6) being filled with a test liquid and the ophthalmic lens (5) being immersed in the test liquid during examination, and with the sonotrode (4) also being immersed in the test liquid during examination of the ophthalmic lens (5), wherein during examination the ophthalmic lens(5) immersed in the test liquid is exposed to ultrasound emitted by the sonotrode (4), with the ultrasonic power and the duration of exposure of the ophthalmic lens (5) to ultrasound being chosen such that a defective ophthalmic lens (5) is destroyed while a perfect ophthalmic lens (5) is not destroyed.

2. Device according to claim 1, wherein the intensity of the ultrasonic power lies in the range of 80 W/m² - 150 W/cm². and is especially 138 W/cm².

3. Device according to any one of the preceding claims, wherein the holding container (6) is of cylindrical shape.

4. Device according to any one of the preceding claims, wherein the frequency of the ultrasound is in a frequency range of 20kHz to 30 kHz.

5. Device according to claim 4, wherein the frequency of the ultrasound is in the range of 24 kHz ± 1 kHz.

6. Device according to any one of the preceding claims, wherein the butt end of the sonotrode (4) has a diameter of 14 mm.

7. Device according to any one of the preceding claims, wherein the holding container (6) is mounted on a spring-loaded holding plate (7).

8. Device according to any one of the preceding claims, wherein the sonotrode (4) is surrounded by a sealing sleeve (8), which seals off the holding container (6) during immersion of the sonotrode (4) in the test liquid.

9. Method of examining an ophthalmic lens, especially a contact lens, for defects, wherein the lens is immersed in a test liquid and exposed to ultrasound, and wherein the ultrasonic power and the duration of exposure of the ophthalmic lens (5) to ultrasound are chosen such that a defective ophthalmic lens (5) is destroyed while a perfect ophthalmic lens (5) is not destroyed.

10. Method according to claim 9, wherein the intensity of the ultrasonic power is in the range of 80 W/cm² - 150 W/cm², and is especially 138 W/cm².

11. Method according to claim 9 or claim 10, wherein an ultrasonic processor (2) with a sonotrode (4) is used to produce the ultrasound.

12. Method according to any one of claims 9 to 11, wherein a cylindrical holding container (6) is used in which the test liquid is contained in which the ophthalmic lens is immersed.

13. Method according to any one of claims 9 to 12, wherein the frequency of the ultrasound is in a frequency range of 20 kHz to 30 kHz.

14. Method according to claim 13, wherein the frequency of the ultrasound is in the range of 24 kHz ± 1 kHz.

15. Method according to any one of claims 9 to 14, wherein a sonotrode (4) with a butt end of 14 mm diameter is used.

16. Method according to claim 15, wherein the sonotrode (4) is surrounded by a sealing sleeve (8), which seals off the holding container (6) during immersion of the sonotrode (4).

17. Method according to any one of claims 9 to 16, wherein the ophthalmic lens to be examined is a soft contact lens.

## Patentansprüche

1. Vorrichtung zum Untersuchen einer ophthalmischen Linse, insbesondere einer Kontaktlinse, umfassend ein Ultraschallgerät (2) mit einer Sonotrode (4) und einem nach oben offenen Aufbewahrungsgefäss (6), wobei das Aufbewahrungsgefäss (6) mit einer Prüfflüssigkeit gefüllt ist und wobei die ophthalmische Linse (5) während der Untersuchung in die Prüfflüssigkeit eingetaucht ist, und wobei die Sonotrode (4) ebenfalls während der Untersuchung der ophthalmischen Linse (5) in die Prüfflüssigkeit eingetaucht ist, wobei während der Untersuchung die in die Prüfflüssigkeit eingetauchte ophthalmische Linse (5) von der Sonotrode (4) erzeugtem Ultraschall ausgesetzt ist, wobei die Ultraschall-Leistung und die Dauer der Beschallung der ophthalmischen Linse (5) mit Ultraschall so ausgewählt sind, dass eine fehlerhafte ophthalmische Linse (5) zerstört wird, während eine perfekte ophthalmische Linse (5) nicht zerstört wird.

2. Vorrichtung nach Anspruch 1, wobei die Leistungsdichte der Ultraschall-Leistung im Bereich von 80-150 W/cm² liegt, und insbesondere 138 W/cm² ist.

3. Vorrichtung nach einem der vorangehenden Ansprüche, wobei das Aufbewahrungsgefäss (6) zylindrische Form hat.

4. Vorrichtung nach einem der vorangehenden Ansprüche, wobei die Frequenz des Ultraschalls in einem Frequenzbereich von 20 bis 30 kHz liegt.

5. Vorrichtung nach Anspruch 4, wobei die Frequenz des Ultraschalls im Bereich von 24 kHz ± 1 kHz liegt.

6. Vorrichtung nach einem der vorangehenden Ansprüche, wobei der Stumpf der Sonotrode (4) einen Durchmesser von 14 mm aufweist.

7. Vorrichtung nach einem der vorangehenden Ansprüche, wobei das Aufbewahrungsgefäss (6) auf einer gefederten Halterungsplatte (7) gelagert ist.

8. Vorrichtung nach einem der vorangehenden Ansprüche, wobei die Sonotrode (4) mit einer Abschlusshülse (8) umgeben ist, die das Aufbewahrungsgefäss (6) während des Eintauchens der Sonotrode (4) in die Prüfflüssigkeit abschliesst.

9. Verfahren zum Untersuchen einer ophthalmischen Linse, insbesondere einer Kontaktlinse auf Fehler, wobei die Linse in eine Prüfflüssigkeit eingetaucht und Ultraschall ausgesetzt wird, und wobei die Ultraschall-Leistung und die Dauer der Beschallung der ophthalmischen Linse (5) mit Ultraschall so ausgewählt werden, dass eine fehlerhafte ophthalmische Linse (5) zerstört wird, während eine perfekte ophthalmische Linse (5) nicht zerstört wird.

10. Verfahren nach Anspruch 9, wobei die Leistungsdichte der Ultraschall-Leistung im Bereich von 80 W/cm² - 150 W/cm² liegt, und insbesondere 138 W/cm² ist.

11. Verfahren nach Anspruch 9 oder Anspruch 10, wobei ein Ultraschallprozessor (2) mit einer Sonotrode (4) zur Erzeugung des Ultraschalls verwendet wird.

12. Verfahren nach einem der Ansprüche 9 bis 11, wobei ein zylindrisches Aufbewahrungsgefäss (6) verwendet wird, in dem die Prüfflüssigkeit enthalten ist, in welche die ophthalmische Linse eingetaucht ist.

13. Verfahren nach einem der Ansprüche 9 bis 12, wobei die Frequenz des Ultraschalls in einem Frequenzbereich von 20 kHz bis 30 kHz liegt.

14. Verfahren nach Anspruch 13 wobei die Frequenz des Ultraschalls im Bereich von 24 kHz ± 1 kHz liegt.

15. Verfahren nach einem der Ansprüche 9 bis 14, wobei eine Sonotrode (4) mit einem Stumpf von 14 mm Durchmesser verwendet wird.

16. Verfahren nach Anspruch 15, wobei die Sonotrode (4) von einer Abschlusshülse (8) umgeben ist, die das Aufbewahrungsgefäss (6) während des Eintauchens der Sonotrode (4) abschliesst.

17. Verfahren nach einem der Ansprüche 9 bis 16, wobei die zu untersuchende ophthalmische Linse eine weiche Kontaktlinse ist.

## Revendications

1. Dispositif d'examen d'une lentille ophtalmique, en particulier d'une lentille de contact, comprenant un appareil de traitement par ultrasons (2) avec une sonotrode (4) et un récipient conteneur (6) ouvert en sa partie supérieure, le récipient conteneur (6) étant rempli d'un liquide test et la lentille ophtalmique (5) étant immergée dans le liquide test au cours de l'examen, et la sonotrode (4) étant également immergée dans le liquide test au cours de l'examen de la lentille ophtalmique (5), dans lequel durant l'examen, la lentille ophtalmique (5) immergée dans le liquide test est exposée à des ultrasons délivrés par la sonotrode (4), la puissance ultrasonore et la durée d'exposition de la lentille ophtalmique (5) aux ultrasons étant choisies de telle façon qu'une lentille ophtalmique (5) défectueuse soit détruite, mais qu'une lentille ophtalmique (5) parfaite ne soit pas détruite.

2. Dispositif selon la revendication 1, dans lequel l'intensité de la puissance ultrasonore est comprise dans la plage de 80 W/cm² à 150 W/cm², et est en particulier de 138 W/cm².

3. Dispositif selon l'une quelconque des revendications précédentes, dans lequel le récipient conteneur (6) est de forme cylindrique.

4. Dispositif selon l'une quelconque des revendications précédentes, dans lequel la fréquence des ultrasons est comprise dans la plage de 20 kHz à 30 kHz.

5. Dispositif selon la revendication 4, dans lequel la fréquence des ultrasons est comprise dans la plage de 24 kHz ± 1 kHz.

6. Dispositif selon l'une quelconque des revendications précédentes, dans lequel la base de la sonotrode (4) a un diamètre de 14 mm.

7. Dispositif selon l'une quelconque des revendications précédentes, dans lequel le récipient conteneur (6) est monté sur une plaque support sur ressort (7).

8. Dispositif selon l'une quelconque des revendications précédentes, dans lequel la sonotrode (4) est entourée d'un manchon de fermeture (8) qui ferme de façon hermétique le récipient conteneur (6) au cours de l'immersion de la sonotrode (4) dans le liquide test.

9. Procédé d'examen d'une lentille ophtalmique, en particulier d'une lentille de contact, destiné à en déceler des défauts, dans lequel la lentille est immergée dans un liquide test et exposée à des ultrasons, et dans lequel la puissance ultrasonore et la durée d'exposition de la lentille ophtalmique (5) aux ultrasons sont choisies de telle façon qu'une lentille ophtalmique (5) défectueuse soit détruite, mais qu'une lentille ophtalmique (5) parfaite ne soit pas détruite.

10. Procédé selon la revendication 9, dans lequel l'intensité de la puissance ultrasonore est comprise dans la plage de 80 W/cm² à 150 W/cm², et est en particulier de 138 W/cm².

11. Procédé selon la revendication 9 ou la revendication 10, dans lequel un appareil de traitement par ultrasons (2) avec une sonotrode (4) est utilisé pour produire les ultrasons.

12. Procédé selon l'une quelconque des revendications 9 à 11, dans lequel un récipient conteneur cylindrique (6) est utilisé, qui contient le liquide test dans lequel la lentille ophtalmique est immergée.

13. Procédé selon l'une quelconque des revendications 9 à 12, dans lequel la fréquence des ultrasons est comprise dans la plage de 20 kHz à 30 kHz.

14. Procédé selon la revendication 13, dans lequel la fréquence des ultrasons est comprise dans la plage de 24 kHz ± 1 kHz.

15. Procédé selon l'une quelconque des revendications 9 à 14, dans lequel on utilise une sonotrode (4) pourvue d'une base ayant un diamètre de 14 mm.

16. Procédé selon la revendication 15, dans lequel la sonotrode (4) est entourée d'un manchon de fermeture (8) qui ferme de façon hermétique le récipient conteneur (6) au cours de l'immersion de la sonotrode (4).

17. Procédé selon l'une quelconque des revendications 9 à 16, dans lequel la lentille ophtalmique à examiner est une lentille de contact souple.
